# FASCICULE DE BREVET EUROPEEN

(11) **EP 3 269 612 B1**
(45) Date de publication et mention de la délivrance du brevet: **30.01.2019**
(21) Numéro de dépôt: 17182226.5
(22) Date de dépôt: 31.05.2011
(51) Int. Cl.: B61D 3/04, B61D 3/18, B61D 3/16

(54) **VÉHICULE FERROVIAIRE DE TRANSPORT À INTERFACE DE COMPENSATION DE HAUTEUR PAR RAPPORT AU SOL ET CECI PRINCIPALEMENT EN FONCTION DU POIDS DE LA CHARGE À TRANSPORTER**
SCHIENENTRANSPORTFAHRZEUG MIT SCHNITTSTELLE ZUR KOMPENSATION DER HÖHE ÜBER DEM BODEN UND DIES INSBESONDERE ABHÄNGIG VOM ZU TRANSPORTIERENDEN LADEGEWICHT
RAILWAY TRANSPORT VEHICLE WITH INTERFACE FOR COMPENSATING HEIGHT RELATIVE TO THE GROUND, MAINLY ACCORDING TO THE WEIGHT OF THE LOAD TO BE TRANSPORTED

(30) Priorité: 04.06.2010 FR 1002374
(43) Date de publication de la demande: 17.01.2018
(62) Demande divisionnaire de: 11727548.7
(73) Titulaire: Lohr Industrie, 67980 Hangenbieten (FR)
(72) Inventeur: ANDRE, Jean-Luc, 67120 MOLSHEIM (FR); LANGE, Sébastien, 67000 STRASBOURG (FR)
(74) Mandataire: Merckling, Norbert

(56) Documents cités:
- EP-A1- 0 538 648
- EP-A1- 0 900 707
- EP-A2- 0 768 226
- WO-A1-01/98129
- US-A- 6 050 197

## Description

### Domaine technique

La présente invention se rapporte à un véhicule ferroviaire de transport ou à un wagon de fret et en particulier mais non exclusivement, de transport d'unités routières motorisées ou non telles que véhicules routiers, remorques, semi-remorques conteneurs, plateaux...

### Etat de la technique

Dans le cadre de l'allégement du trafic routier on a développé des wagons permettant de recevoir rapidement en position de transport des unités ou charges routières motorisées ou non.

Il s'agit de toute sorte d'unités routières depuis les véhicules routiers motorisés et notamment les véhicules utilitaires jusqu'aux remorques, conteneurs et caisses mobiles et autres véhicules ou partie de véhicules susceptibles de rouler ou d'être transportées sur routes ou autoroutes.

Parmi ces wagons spécialisés il existe ceux qui comportent habituellement une structure ferroviaire porteuse que l'on rend mobile transversalement ou par pivotement pour réaliser rapidement avec ou sans l'aide de moyens extérieurs, le chargement ou le déchargement et plus généralement le transbordement des charges ou unités routières : véhicules, remorques semi-remorques et autres.

Il existe aussi ceux que l'on charge par le haut à l'aide de moyens de manutention destinés à soulever les unités routières, à les amener au-dessus du wagon et à les déposer dans le wagon par un mouvement vertical.

De plus, on connaît un système de transport appelé autoroute ferroviaire selon lequel les unités routières motorisées ou tractées roulent jusqu'à leur emplacement de transport sur une piste formée par la suite des wagons accrochés les uns aux autres séparés par des plateformes de roulage.

Ces wagons sont prévus pour le transport dit rail/route appelé typiquement transport bimodal.

Plus généralement, la présente invention se rapporte à tous les wagons de transport de marchandises, dont celles quelconques, chargées dans une structure ferroviaire porteuse ou transportées dans une structure faisant office de réceptacle ou de contenant, mais il s'agit aussi de la charge elle même qui peut contenir des marchandises.

Les wagons se caractérisent par des ensembles ferroviaires d'extrémité supportés par des roues et des essieu(x) agrées pour le parcours auquel ils sont destinés. Ces ensembles d'extrémité sont reliés par une structure de liaison porteuse recevant la ou les charge(s) à transporter formant avec les ensembles d'extrémité un wagon de transport.

La présente invention s'applique à tous les types de structures de liaison porteuses ou réceptrices et porteuses utilisées dans le cadre du transport ferroviaire et notamment du transport ferroviaire bimodal rai/route.

Tous les wagons sont soumis à des contraintes dimensionnelles imposées par les réglementations. Elles proviennent principalement des structures de voies, des bordures de quai, des appareils de voies et autres obstacles possibles se trouvant à demeure ou temporairement à proximité de la voie avec lesquelles le wagon ne doit pas interférer lors de sa circulation sur les rails.

Cette contrainte limite dimensionnellement la partie inférieure du wagon ainsi que la forme de sa section transversale et notamment la position de la partie la plus basse entre les ensembles d'extrémité par rapport au sol.

Il en va de même pour la hauteur du wagon ou de son chargement qui se trouve limitée par les tunnels, les ponts et plus généralement les ouvrages d'art et les signaux, les poteaux et les caténaires et toute structure de voie ou de quai proche de la voie.

Toutes ces limitations ont été matérialisées par le gabarit ferroviaire qui est une figure périmétrique définissant un espace fermé à l'intérieur duquel doit se trouver le contour transversal du wagon. Des limites verticales mais aussi latérales à ne pas dépasser sont ainsi imposées pour le wagon qu'il soit chargé ou non.

La ligne inférieure de ce gabarit est assez basse et la présente invention a pour but d'exploiter au maximum et dans tous les cas c'est-à-dire pour toutes les charges et les états de vieillissement et d'usure des wagons, la limite la plus basse possible pour la partie inférieure la plus basse entre les ensembles d'extrémité. Il en résulte un plus grand espace vers le haut à l'intérieur du gabarit ferroviaire.

Comme les charges, par exemple les unités routières peuvent être de nature, de dimensions et surtout de poids essentiellement variables, l'enfoncement des suspensions du wagon et les déformations des structures varient sensiblement.

Viennent s'ajouter les déformations diverses du fond qui présente à l'état chargé une flèche longitudinale et une flèche transversale fonction du poids de la charge. Interviennent aussi les efforts et débattements dynamiques dus au roulage ainsi que le diamètre variable des roues ferroviaire dû à leur reprofilage en raison de l'usure. En effet, le roulement fer sur fer des roues ferroviaires sur les rails demande pour assurer la stabilité du wagon, un profil bien précis des tables de roulement. Le roulement sur les rails use ces tables de roulement et il convient de les réusiner régulièrement ce qui diminue le rayon des roues et descend le niveau du wagon.

Toutes ces variations engendrent une modification variable du niveau bas pour le fond de la structure ferroviaire porteuse sachant que ce niveau bas ne peut en aucun cas être inférieur à la limite imposée par la ligne inférieure du gabarit ferroviaire. Il se trouve que, en raison de leur disparité, peu de chargements permettent de profiter de la possibilité de niveau bas du gabarit pour un même wagon. En effet, seuls les chargements correspondant à ceux prévus à la conception du wagon peuvent remplir cette condition car les wagons et notamment leurs suspensions sont conçus et fabriqués pour n'atteindre ce niveau bas maximal que pour les charges les plus lourdes à transporter.

Il en est de même pour les wagons dont la structure de liaison est l'unité routière elle-même par exemple une semi-remorque et de façon générale pour un porte-charge quelconque remplissant cependant les caractéristiques générales ferroviaires et notamment celles imposées par le roulage ferroviaire.

En effet, les caractéristiques techniques de l'interface entre les extrémités de la structure ferroviaire porteuse ou son fond y compris les porte-charges et les autres éléments du wagon sont prévues pour les chargements les plus lourds, c'est-à-dire ceux pour lesquels les suspensions sont les plus comprimées et les flèches d'incurvation liées au poids de la charge les plus importantes.

Les charges moins lourdes ou les structures porteuses ou porte-charge(s) moins chargés ne peuvent profiter de ce niveau bas maximal car le niveau bas du fond de la structure ferroviaire porteuse ou du porte-charge s'établit pour celles-ci plus haut que ce qu'il pourrait être. On perd ainsi en hauteur admissible disponible pour la charge. Pour une charge de hauteur donnée, on arriverait ainsi à dépasser la limite haute du gabarit ferroviaire. Les structures ferroviaires porteuses et les porte-charges actuels, sont ainsi pénalisées en hauteur pour leur transport à vide ou faiblement chargées.

Par les documents EP 0900707 A1 et EP 0538648 A1, on connait des wagons de transport ferroviaire comportant chacun un dispositif de déplacement d'une plateforme porteuse.

Dans le document EP 0900707 A1, la hauteur de la plateforme porteuse est modifiée par un système de bielles et de vérins hydrauliques de manière à pouvoir l'abaisser occasionnellement, par exemple à l'entrée des tunnels.

Le document EP 0538648 A1 divulgue une plateforme porteuse pour des conteneurs ou des semi-remorques qui est inclinable au sol, entre deux hauteurs différentes fixes et prédéfinies.

Le document EP 0768226 A2 divulgue un wagon de structure comparable à celui de l'invention, mais qui ne comporte pas d'interface de compensation en hauteur permettant de placer sa structure de liaison à une hauteur la plus basse possible compatible avec le gabarit ferroviaire.

### Description de l'invention

La présente invention a pour but de remédier à ces inconvénients en assurant une distance optimale voire minimale, et quasi constante entre le sol et la partie inférieure la plus basse du wagon existant entre les ensembles d'extrémité, s'affranchissant ainsi de toutes les variations pouvant affecter cette distance. Cette distance est la plus faible possible compte tenu des limitations provenant des formes de cette partie basse et de celles liées au gabarit ferroviaire.

Pour ce faire, on réalise au moins une, mais de préférence une pluralité d'interfaces de rehausse ou de compensation de hauteur entre toute structure et les ensembles d'extrémité et ceci en fonction notamment des valeurs variables liées aux disparités des charges et de l'état du wagon. Ainsi, cette adaptation en hauteur s'effectue principalement en fonction du poids de la charge et de l'usure des roues ferroviaires.

Les objets assignés à l'invention sont atteints à l'aide d'un wagon de transport constitué de deux ensembles ferroviaires roulants d'extrémité selon la revendication 1.

Selon un autre exemple de mise en oeuvre de l'invention, la structure de liaison est du type porte-charge(s), véhicule routier motorisé ou non tel qu'une remorque, une semi-remorque, un conteneur, une caisse mobile ou un plateau porteur amovible.

Selon un exemple supplémentaire de mise en oeuvre de l'invention, le niveau bas est celui le plus bas admissible compte tenu du gabarit ferroviaire et de la forme inférieure du wagon.

Selon un exemple de mise en oeuvre de l'invention, le wagon comporte deux ou quatre interfaces de compensation de hauteur dont au moins une à chacune des extrémités de la structure de liaison.

Selon un autre exemple de mise en oeuvre de l'invention, les ensembles ferroviaires roulants d'extrémité portent la structure de liaison par ses extrémités à travers un moyen intermédiaire de support, de connexion ou de liaison.

Selon un exemple supplémentaire de mise en oeuvre de l'invention, le réglage en hauteur s'effectue par la variation d'épaisseur d'au moins une pièce d'interposition.

Selon un exemple de mise en oeuvre de l'invention, le réglage en hauteur s'effectue par le déplacement longitudinal ou transversal à la structure de liaison d'au moins une pièce d'interposition présentant au moins une face de portée oblique.

Selon un autre exemple de mise en oeuvre de l'invention, le réglage en hauteur s'effectue par une conformation en rampe oblique.

Selon un exemple supplémentaire de mise en oeuvre de l'invention, le réglage en hauteur s'effectue par un écarteur.

Selon un exemple de mise en oeuvre de l'invention, le réglage en hauteur s'effectue par au moins un dispositif à came, au moins un dispositif à levier, au moins un dispositif à parallélogramme, au moins un dispositif à glissière, au moins un dispositif à broches ou à axes, au moins un vérin à vis, ou hydraulique ou pneumatique, au moins un dispositif à soufflet ou au moins un dispositif à crémaillère.

Selon un autre exemple de mise en oeuvre de l'invention, l'au moins une interface de compensation en hauteur se trouve à chacune des extrémités de la structure réceptrice et porteuse et est placée au-dessus de chaque plateforme couvrant chaque crapaudine.

Selon un exemple supplémentaire de mise en oeuvre de l'invention, l'au moins une interface de compensation en hauteur se trouve à chacune des extrémités des bras de la structure ferroviaire réceptrice et porteuse entre chaque crochet d'accrochage et la partie portant le crochet de chaque bras d'extrémité de la structure ferroviaire réceptrice et porteuse.

Selon un exemple de mise en oeuvre de l'invention, les pièces des plateformes d'extrémité recevant les extrémités en crochet sont des têtes d'appui.

L'invention permet ainsi, dans tous les cas et pour toutes les charges transportées d'exploiter au mieux, voire tout, le gabarit ferroviaire et en particulier de bénéficier d'un espace supérieur supplémentaire particulièrement intéressant.

Ceci est vrai également dans le cas d'une structure porte-charge faisant office de structure ferroviaire porteuse c'est-à-dire assurant la liaison entre les deux ensembles d'extrémité.

### Brève description des dessins

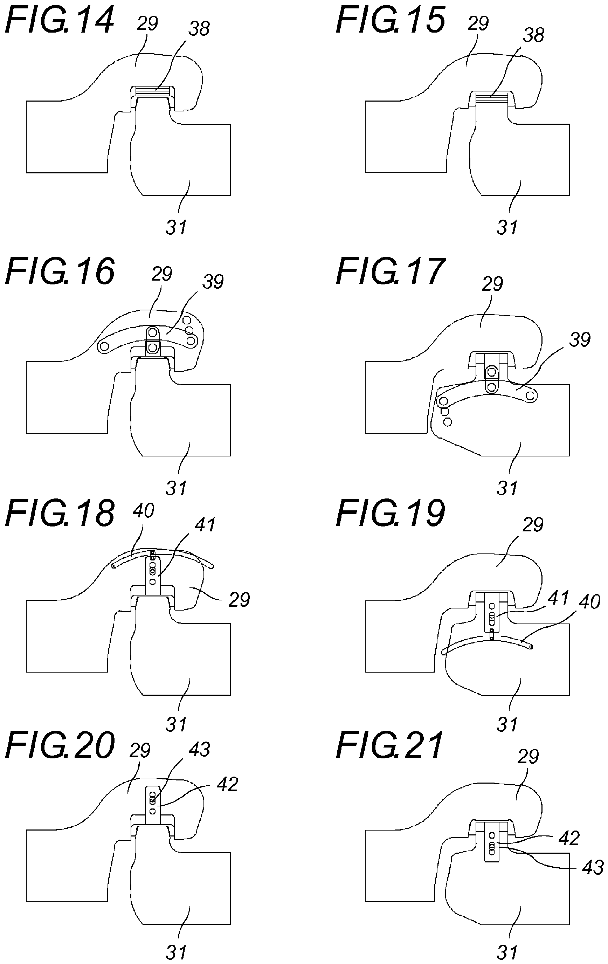

D'autres caractéristiques et avantages de l'invention apparaîtront dans la description qui suit, donnée à titre d'exemple et accompagnée des dessins dans lesquels :

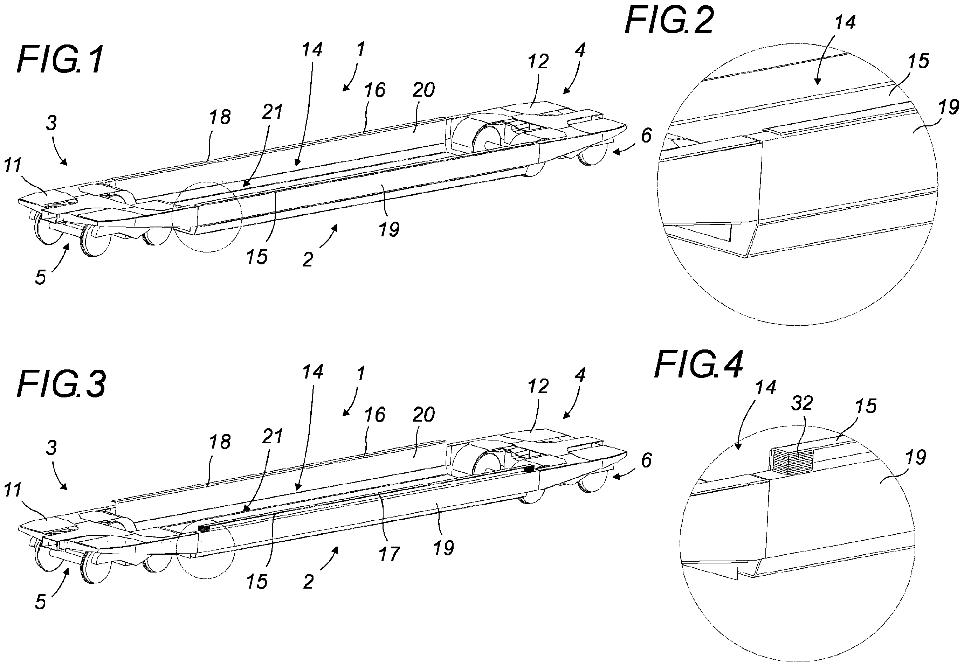

- les figures 1 à 8 sont des vues en perspective de deux wagons à structure ferroviaires porteuses de types différents avec et sans interface de rehausse et à chaque fois un agrandissement sur la zone encerclée où se trouve placée la rehausse, les figures 1 à 4 correspondant à un type de wagon ne faisant pas partie de l'invention revendiquée,

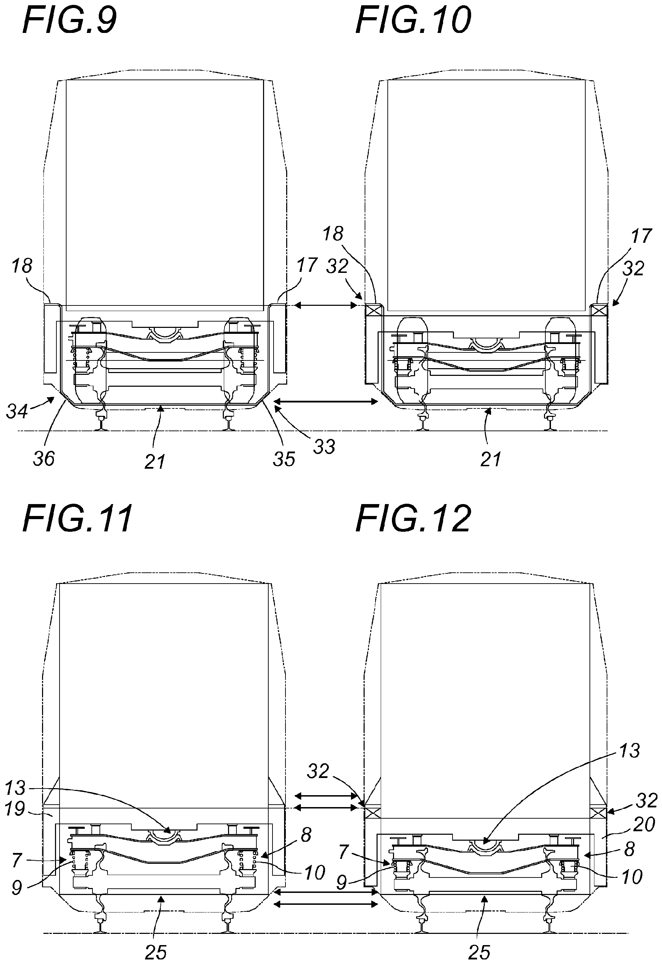

- les figures 9 à 12 sont de vues schématiques générales explicatives de la mise à hauteur et du gabarit ferroviaire représenté en traits mixtes dans le cas des deux types de structures ferroviaires porteuses ci-dessus montrant le rattrapage en hauteur entre une charge routière à vide (figures de gauche) et la même charge routière à poids maximal avec des différences pour le wagon liées à l'usure (figures de droite),

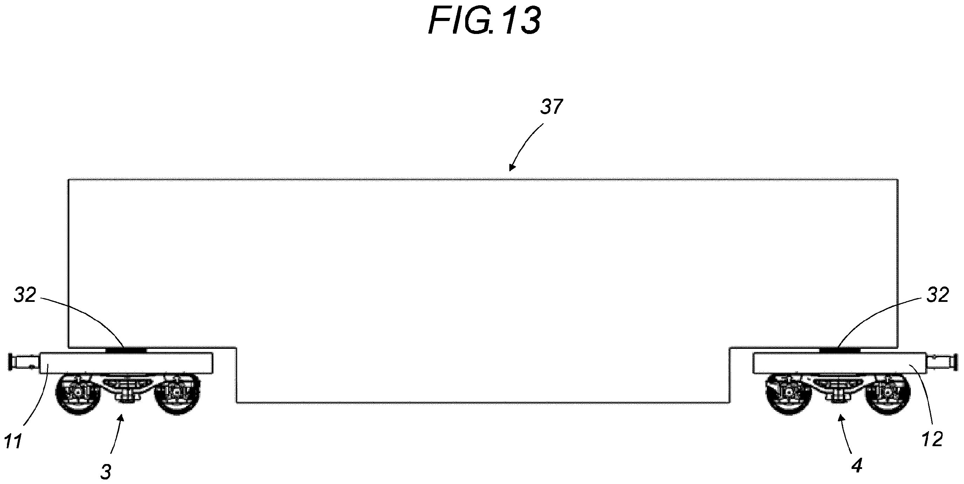

- la figure 13 est une vue schématique de profil illustrant un wagon, ne faisant pas partie de l'invention revendiquée, formé par deux ensembles ferroviaires d'extrémité reliés par une structure de liaison qui peut être un porte-charge(s) routier, un conteneur, un plateau ou toute autre structure,
   ▪ les figures 14 à 29 sont des croquis schématiques illustrant de façon simple à chaque fois par deux vues en silhouette montrant deux emplacements possibles, plusieurs dispositifs de réglage en hauteur constituant l'interface de compensation de hauteur dans le cas d'une structure réceptrice et porteuse avec bras terminés chacun par un crochet dont :
   - les figures 14 et 15 ; un dispositif à cales dans la crosse du crochet et sur la tête d'appui du crochet,
   - les figures 16 et 17 ; un dispositif à levier reprenant les efforts,
   - les figures 18 et 19 ; un dispositif à levier ne reprenant pas les efforts,
   - les figures 20 et 21 ; un dispositif à pièce immobilisée par une broche,
   - les figures 22 et 23 : un dispositif à vérin à vis,
   - les figures 24 et 25 : un dispositif à coin,
   - les figures 26 et 27 : un dispositif à glissière,
   - les figures 28 et 29 : un dispositif à parallélogramme déformable.

### Mode(s) de réalisation de l'invention

La présente invention procède de l'idée générale inventive qui consiste à prévoir entre les ensembles ferroviaires d'extrémité et la structure de liaison directement ou indirectement réceptrice d'une charge une ou de préférence plusieurs interfaces de compensation de hauteur.

Ces interfaces de compensation de hauteur permettent de compenser les débattements verticaux des parties de support des ensembles ferroviaires d'extrémité afin de permettre de loger dans le gabarit ferroviaire toute structure de liaison avec sa charge et dans toutes les conditions et états du wagon.

Ces interfaces de compensation de hauteur permettent le réglage à une hauteur adaptée de la structure de liaison ou son réceptacle de la charge avant ou éventuellement après son chargement, de manière à exploiter au mieux la limite basse du gabarit ferroviaire sans engager sa limite haute.

Ainsi, la partie la plus basse du wagon entre les ensembles ferroviaires d'extrémité peut se trouver, au niveau le plus bas admissible compte tenu du gabarit ferroviaire et ceci pour offrir le volume utile maximum dans la limite haute du gabarit ferroviaire.

Cette mise à une hauteur adaptée est établie principalement en fonction du poids total de la ou des charge(s) de manière à utiliser au maximum les possibilités du gabarit ferroviaire dans sa limite basse. Dans la pratique, avant le chargement de chaque charge ou avant chaque montage ou constitution du wagon, par exemple chaque montage ou dépose d'une semi-remorque dans la structure porteuse, et pour chaque wagon de caractéristiques données et selon son état d'usure correspondra une mise à hauteur adaptée d'une structure par exemple de la structure de liaison ou du réceptacle de la charge ou celle du porte-charge(s).

L'indication du poids peut être déclarée par le chauffeur ou les responsables du transport ou bien résulter d'une pesée systématique.

On décrira tout d'abord ci-après, à titre d'exemple non limitatif, deux types de structures de liaison. Il s'agit de structures ferroviaires réceptrices et porteuses, simples ou composites, représentées sur les figures 1 à 8.

En se référant à ces figures, un wagon 1 de transport bimodal rail/route est constitué d'une structure de liaison 2 par exemple une ferroviaire porteuse ou réceptrice et porteuse 2 et de deux ensembles ferroviaires roulants d'extrémité avant 3 et arrière 4. Ce wagon 1 est prévu principalement dans ce cas, pour transporter des véhicules routiers motorisés ou non, chargés ou non ou des charges routières, mais l'invention vise tous les types de structures de liaison 2.

La structure ferroviaire réceptrice et porteuse 2 peut se présenter sous différents types et se composer de deux ensembles l'un porteur et l'autre récepteur. Pour des raisons de simplification, on ne décrira ci-après dans un premier temps, que les deux types représentés de façon schématique sur les figures 1 à 8. Bien entendu, les autres types entrent parfaitement dans le concept et le cadre de la présente invention dont la protection s'étend automatiquement à ceux-ci.

La structure de liaison est montée directement ou indirectement ou repose directement ou indirectement, de façon articulée ou dissociable ou non par ses extrémités sur l'un et l'autre des ensembles ferroviaires d'extrémité.

Les ensembles ferroviaires d'extrémité avant 3 et arrière 4 sont des ensembles ferroviaires roulants correspondant aux caractéristiques admises pour une application ferroviaire, par exemple de constitution classique dans le domaine des wagons. Ils comportent, par exemple, des bogies avant 5 et arrière 6 à un ou deux essieux, des suspensions telles 7 et 8 à ressorts 9 et 10 et selon le cas, des plateformes d'extrémité 11 et 12 avec les traditionnels moyens adaptés dont les crapaudines telles que 13 et les lisoirs et différents autres éléments fonctionnels ainsi qu'une interface, de support, de connexion ou de liaison.

Diverses variantes d'ensembles ferroviaires roulants d'extrémité sont possibles.

Par structure ferroviaire porteuse on comprendra toute structure de liaison supportant directement ou indirectement la charge entre les deux ensembles ferroviaires d'extrémité 3 et 4.

Le premier type de structure de liaison 2 représenté sur les figures 1 à 4 se présente sous une forme composite comportant d'abord un bac de réception 14 de la charge à bordures longitudinales 15 et 16 repliées chacune vers l'extérieur selon un bord plat 17 et 18 formant à chaque fois une plage d'appui. La structure de liaison 2 se compose ensuite de deux longerons porteurs de liaison 19 et 20 pouvant former un cadre. Sur le chant supérieur de chacun de ces longerons vient s'appuyer respectivement un des bords plats 17 et 18. Ces longerons porteurs de liaison 19 et 20 relient les ensembles ferroviaires d'extrémité avant 3 et arrière 4 entre eux. Le bac de réception 14 est un réceptacle de la ou des charge(s) qui présente en partie inférieure un fond 21 obscur ou formé d'une pluralité de traverses sur lequel est amenée ou déposée la charge par exemple routière. Ce réceptacle joue le rôle de structure intermédiaire portant la ou les charge(s).

La constitution de ce bac de réception 14 peut être encore plus simple. En effet, il peut s'agir d'une simple forme réceptrice, réalisée à partir de deux longerons supportant en partie inférieure un fond en cadre.

Ce type de structure réceptrice et porteuse est de préférence chargée par amenée et descente verticale de la charge puis levage en fin de transport pour son enlèvement lors du déchargement.

Bien entendu, d'autres exemples de réalisation sont possibles.

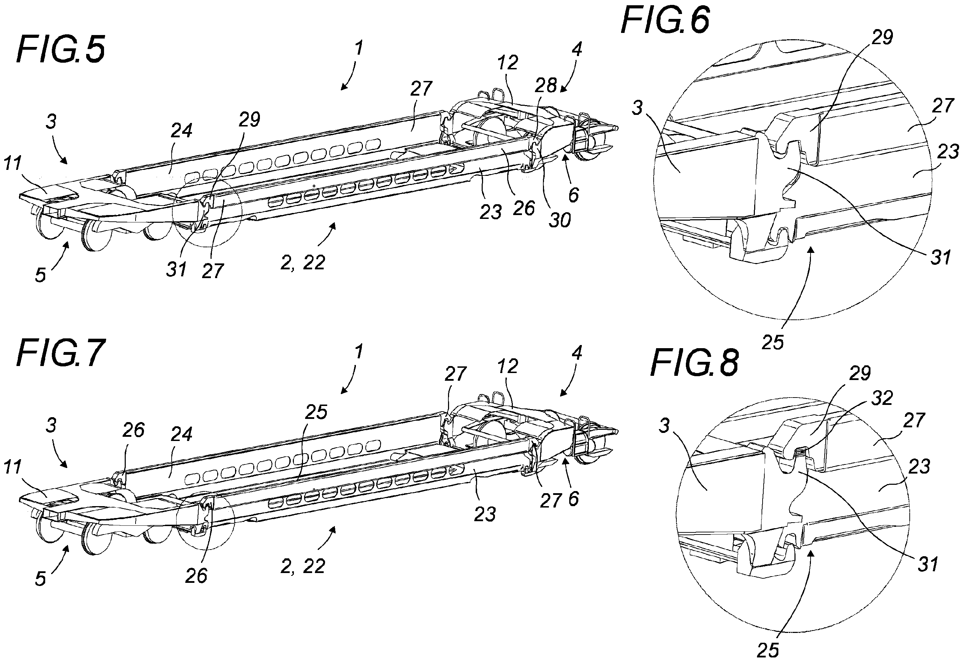

Les figures 5 à 8 montrent, à titre d'exemple, un autre type de structure de liaison 2. Il s'agit d'une structure ferroviaire réceptrice et porteuse 22 selon laquelle deux pièces de flanc 23 et 24 bordent un fond 25. Ces pièces de flanc 23 et 24 se terminent à chacune des extrémités de la structure ferroviaire porteuse par deux bras 26 et 27 prolongés par des extrémités en crochet 28 et 29. Ces extrémités en crochet 28 et 29 viennent s'immobiliser sur des pièces ou conformations complémentaires par exemple des têtes d'appui 30 et 31 des plateformes d'extrémité 11 et 12 permettant une dissociation simple et rapide de la structure ferroviaire porteuse 22 par rapport aux ensembles ferroviaires roulants d'extrémité 3 et 4.

Selon l'invention, on prévoit au moins une, par exemple deux ou quatre interfaces 32 de compensation et de réglage en hauteur entre la structure de liaison 2 portant la ou les charge(s) et un ou chaque ensemble d'extrémité ou entre la structure de liaison 2 et une structure intermédiaire portant la ou les charge(s). Cette ou ces interface(s) 32 permettant à la partie inférieure du wagon la plus basse située entre les ensembles d'extrémité 3 et 4 de se trouver à un niveau bas constant ou quasi constant et indépendant des variations liées à la charge et au wagon.

Pour le premier type de structure de liaison, une ou plusieurs interface(s) de compensation 32 se trouve(nt) placée(s) entre la structure de liaison et la structure intermédiaire portant la ou les charge(s).

Pour le deuxième type de structure de liaison, à savoir à pièces de flancs 23 et 24 terminées en crochet, on prévoit une interface 32 de réglage en hauteur au niveau de chaque crochet entre la partie inférieure de la crosse du crochet 28 ou 29 et la tête correspondante d'appui 30 et 31 des supports des ensembles d'extrémité.

Selon le cas, le wagon comporte deux ou quatre interfaces 32 de compensation de hauteur dont au moins une à chacune des extrémités de la structure de liaison 2.

On comprendra mieux le problème résolu par l'invention en se reportant aux figures 9 à 12.

Les figures de gauche 9 et 11 montrent, pour les deux types, l'extrémité du wagon lorsqu'il porte une charge routière vide ou légère, par exemple une semi-remorque vide et dans le cas de roues de wagon neuves c'est-à-dire du plus grand diamètre possible. Les ressorts des suspensions sont légèrement comprimés.

On exploite au mieux le gabarit vers le bas car on peut se permettre des caractéristiques de construction du wagon, notamment celles de ses suspensions, telles que le fond de la structure ferroviaire porteuse arrive le plus bas possible compte tenu de ses formes inférieures en coins latéraux inférieurs 33 et 34 coupés par un plan oblique 35 et 36 ou plus ou moins saillants dans les deux types représentés à titre d'exemple. Dans ce cas, on peut charger par exemple, une semi-remorque vide d'une hauteur maximale comprise entre les limites haute et basse du gabarit ferroviaire.

Grâce à la solution inventive, illustrée par les figures 10 et 12, sur laquelle l'interface 32 est représentée par un carré barré d'une croix, on garde ce niveau inférieur le plus bas, même dans le cas le plus défavorable c'est-à-dire celui d'une semi-remorque chargée provoquant l'affaissement des suspensions et de roues de wagon usées. Les suspensions sont comprimées car sollicitées par la semi-remorque chargée, ce qui, pour un wagon de mêmes caractéristiques constructives se traduirait par un affaissement en deçà de la limite inférieure du gabarit ferroviaire qui est la limite à ne pas dépasser. Mais, grâce à l'interface ou aux interfaces 32 selon l'invention, le niveau bas qui serait atteint est alors relevé.

Les bords supérieurs de la structure ferroviaire porteuse et son fond se trouvent dans les deux cas au même niveau pour deux charges de poids sensiblement différent. Ceci est matérialisé sur les figures par une double flèche.

On remarque dans ce cas, que le fond de la structure de liaison, par exemple celui de la structure ferroviaire réceptrice et porteuse, se trouve exactement au même niveau par rapport au plan défini par les rails. Les longerons porteurs de liaison 19 et 20 ainsi que les plateformes d'extrémité sont descendues par l'écrasement des ressorts des suspensions et le reprofilage extrême des roues. La semi-remorque représentée est chargée et occupe totalement le gabarit ferroviaire sans dépassement ni vers le haut ni vers le bas.

La structure de liaison 2 ferroviaire porteuse peut être constituée par une structure porte-charge(s) ou un porte-charge(s) que l'on a monté de façon fixe ou amovible directement ou par un support intermédiaire entre les deux ensembles ferroviaires roulants d'extrémité 3 et 4.

Par structure porte-charge(s) ou par porte-charge(s), on entend toute sorte de structures c'est-à-dire les structures les plus diverses pouvant recevoir une charge quelconque de fret général ou une charge particulière technique ou fragile ou nécessitant des précautions particulières, celles-ci pouvant être utilisées à vide pour constituer un wagon et garder leur désignation de structure porte-charge(s) ou simplement de porte-charge(s).

A cet effet, on peut citer tous les porte-charges routiers c'est-à-dire servant de charge à des véhicules routiers tels que les conteneurs, les caisses mobiles, les plateaux ou plateformes amovibles, les porte-engin(s), les châssis porteurs, ainsi que les structures les plus diverses transportées aussi par bateaux ou par avion ou bien des véhicules routiers motorisés ou non par exemple les remorques ou les semi-remorques.

Ces structures porte-charge(s) utilisées comme structures ferroviaires de liaison entre les ensembles ferroviaires d'extrémité, doivent bien entendu, présenter les caractéristiques techniques nécessaires à leur fonction ferroviaire, notamment pouvoir transmettre les efforts de traction. Dans le cas contraire, une structure de liaison supplémentaire rigide et suffisamment résistante doit être prévue à cet effet. Cette structure de liaison peut être ou porter le porte-charge(s).

Sur la figure 13, on a représenté schématiquement un wagon constitué de deux ensembles ferroviaires roulants d'extrémité 3 et 4 réunis entre eux par une structure quelconque pouvant transporter une charge appelée toujours de façon générale un porte-charge(s) 37, même s'il ne transporte aucune charge(s) dont on ne distingue que le contour pour être le plus général possible.

Le châssis ou les éléments bas de structure de ces porte-charge(s) 37 jouent le rôle de structure de liaison ferroviaire porteuse. Les interfaces de compensation en hauteur sont situées entre les plateformes d'extrémité des ensembles ferroviaires roulants d'extrémité et les parties en regard de ces porte-charges.

Il peut arriver que la résistance mécanique de structure de ces porte-charges ne permette pas de supporter les efforts de traction. Dans ce cas, il y a lieu de prévoir un support intermédiaire de liaison suffisamment résistant pour transmettre sans risque les efforts de traction et les efforts dynamiques du roulage.

On peut aussi avoir besoin d'une simple liaison mécanique entre les ensembles ferroviaires d'extrémité pour maintenir ceux-ci à une distance fixe l'un de l'autre. Dans ce cas, ce type de liaison mécanique n'a pas besoin de transmettre les efforts de traction.

Par l'interface de compensation et de réglage en hauteur selon l'invention, il faut comprendre un moyen général permettant de réaliser l'adaptation en hauteur nécessaire pour que la structure porteuse arrive, quelle que soit la charge, à un niveau bas quasi constant et notamment au niveau le plus bas possible en ne dépassant pas la limite inférieure imposée par le gabarit ferroviaire.

Cette interface de compensation et de réglage en hauteur est intercalée entre la structure ferroviaire réceptrice et l'élément de soutien sur lequel elle repose ou le cadre de liaison ou les plateformes d'extrémité.

Ce système de compensation est réglé ou posé sur les ensembles d'extrémité ou sous la charge ou sous le réceptacle de la charge avant que la charge ou la structure réceptrice ne repose sur les plateformes d'extrémité ou sur le cadre porteur. De ce fait, il n'est pas nécessaire de disposer d'énergie, la mise en place de la compensation s'effectuant wagon ouvert, ou libre de sa structure réceptrice.

Sa fonction générale est une compensation de hauteur c'est-à-dire un rattrapage du déplacement des plateformes d'extrémité, ou de la plus faible hauteur en charge des ensembles ferroviaires d'extrémité en fonction principalement du poids de la charge à transporter, mais aussi des caractéristiques de déformation due à la charge et d'usure du wagon.

Elle peut être de différentes natures et prendre différentes formes.

Il peut s'agir d'un moyen de soutien et d'élévation ou d'un écarteur ou de tout dispositif de soulèvement à des amplitudes variables de façon continue ou par paliers, par exemple sous la forme d'un ensemble composite d'interposition du type cale, constitué d'un empilement de plusieurs pièces d'épaisseur ou d'un dispositif d'épaisseur variable par variation de forme du genre came ou équivalent ou d'une pièce mobile dans une base ou d'un élément gonflable ou bien d'un dispositif à allongement comme dans le cas d'un soufflet pneumatique ou hydraulique, d'un vérin à vis, d'une crémaillère et de façon générale tout moyen ou dispositif permettant de réaliser une variation de niveau d'un ensemble par rapport à un autre ou entre deux surfaces ou de tout moyen d'écartement.

On explicitera ci-après de façon non limitative différentes variantes de ce moyen en se référant aux figures 14 à 29 représentant quelques exemples appliqués sur les extrémités en crochet des bras de la structure ferroviaire porteuse des figures 5 à 12. Bien entendu, les applications couvrent tous les types de structures ferroviaires porteuses.

Ces figures montrent des moyens de soutien et d'élévation les plus divers constituant l'interface de réglage en hauteur. Ces moyens peuvent être actionnés manuellement ou à distance, commandables par un opérateur ou automatiques, individuellement ou à commande centralisée.

On distingue ainsi les exemples suivants définis de façon simple.

Représenté sur les figures 14 et 15, un moyen de soutien et d'élévation est constitué d'un empilement 38 de pièces d'épaisseur amovibles qui viennent se superposer ou s'enlever de manière à former une cale d'épaisseur variable. On modifie la hauteur en intercalant ou en enlevant l'une ou l'autre pièce d'épaisseur. Cet empilement 38 se trouve soit sur la garniture de la tête complémentaire d'appui soit sous cette tête.

Ce moyen est celui pris comme exemple sur les figures 4 et 8 sur lesquelles on voit son emplacement respectivement entre la bordure d'appui et les extrémités des longerons et entre le crochet et la tête d'appui correspondante.

Les figures 16 et 17 montrent un dispositif à levier 39 qui reprend les efforts, ce dispositif à levier 39 étant placé soit au niveau du crochet soit au niveau de la tête d'appui. Le levier est monté pivotant et articulé sur un coulisseau d'appui. Plusieurs positions d'immobilisation se réalisent par exemple par brochage dans des perçages. Le système est réglé le wagon étant ouvert.

Les figures 18 et 19 représentent un dispositif à levier 40 mais qui ne reprend pas les efforts. Le levier 40 actionne une pièce de mise à hauteur 41 qui est immobilisée par brochage soit sur l'extrémité en crochet soit sur la tête d'appui.

Les figures 20 et 21 représentent un dispositif à pièce d'appui 42 immobilisée par une broche venant s'insérer dans un des perçages 43 d'une série de perçages à différents niveaux.

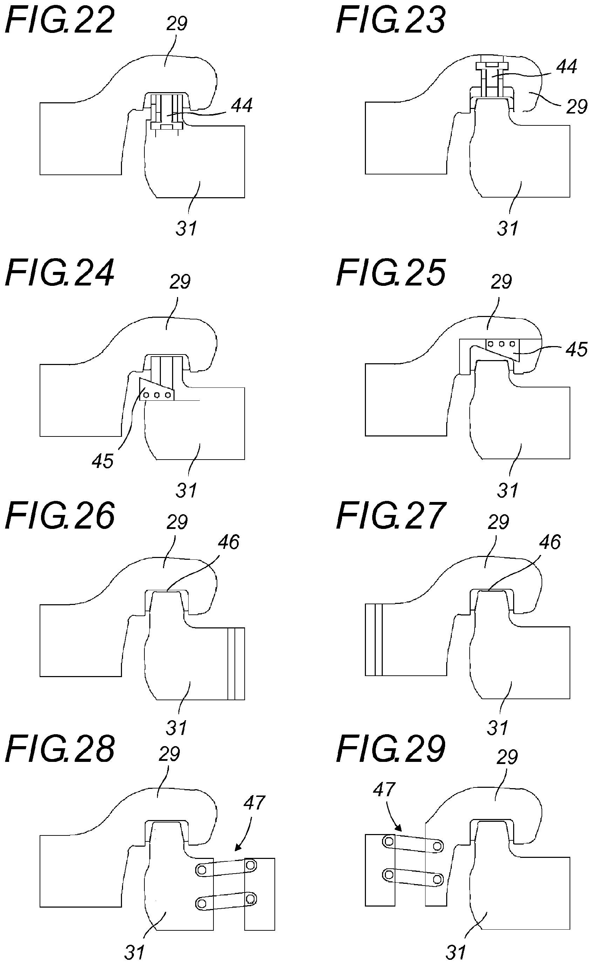

Les figures 22 et 23 représentent schématiquement un moyen d'un autre type puisqu'il s'agit d'un vérin à vis 44 présent soit au niveau du crochet, soit dans la tête d'appui.

Les figures suivantes montrent respectivement pour des endroits d'implantation différents les dispositifs suivants :
- figures 24 et 25 : un dispositif à pièce mobile en rampe inclinée 45 du type coin,
- figures 26 et 27 : un dispositif utilisant une glissière 46,
- figures 28 et 29 : un dispositif à liaison par parallélogramme 47.

Bien d'autres dispositifs remplissant la fonction générale d'épaisseur ou d'écartement variable sont possibles et entrent tous dans le cadre de la présente invention.

## Revendications

1. Wagon de transport constitué de deux ensembles ferroviaires roulants d'extrémité (3) et (4) comportant chacun une plateforme d'extrémité (11, 12), ainsi qu'une structure de liaison (2) entre ces ensembles d'extrémité pour porter au moins une charge de fret général ou liée au transport routier, cette structure de liaison (2) étant montée directement ou indirectement, ou reposant directement ou indirectement de façon articulée ou dissociable ou non par ses extrémités, sur les deux ensembles ferroviaires roulants d'extrémité (3) et (4), **caractérisé en ce que** :
• la structure de liaison (2), qui est une structure ferroviaire porteuse, comprend deux pièces de flanc (23) et (24) bordant un fond (25) et se terminant à chacune des extrémités de la structure ferroviaire porteuse par deux bras (26) et (27) prolongés par des extrémités en crochet (28) et (29) ;
• les extrémités en crochet (28) et (29) sont reçues par des pièces des plateformes d'extrémité (11) et (12) permettant une dissociation de la structure ferroviaire porteuse (2) par rapport aux ensembles ferroviaires roulants d'extrémité (3) et (4) ;
• le wagon comporte au moins une interface (32) de compensation en hauteur qui constitue son ou ses moyen(s) de réglage initial à une hauteur prédéterminée avant chaque transport d'au moins une charge et pendant toute la durée de celui-ci permettant de placer la structure de liaison (2) à cette hauteur prédéterminée fonction des variables liées au wagon à vide et en charge, pour que, à chaque fois, la partie la plus basse existant entre les ensembles ferroviaires roulants d'extrémité (3) et (4) du wagon se trouve partout à un niveau bas proche de, mais sans dépasser, la limite inférieure du gabarit ferroviaire.

2. Wagon selon la revendication 1, **caractérisé en ce que** la structure de liaison (2) est du type porte-charge(s), véhicule routier motorisé ou non tel qu'une remorque, une semi-remorque, un conteneur, une caisse mobile ou un plateau porteur amovible.

3. Wagon selon l'une quelconque des revendications précédentes, **caractérisé en ce que** le niveau bas est celui le plus bas admissible compte tenu du gabarit ferroviaire et de la forme inférieure du wagon.

4. Wagon selon l'une quelconque des revendications précédentes, **caractérisé en ce qu'**il comporte deux ou quatre interfaces (32) de compensation de hauteur dont au moins une à chacune des extrémités de la structure de liaison (2).

5. Wagon selon l'une quelconque des revendications précédentes, **caractérisé en ce que** les ensembles ferroviaires roulants d'extrémité (3) et (4) portent la structure de liaison (2) par ses extrémités à travers un moyen intermédiaire de support, de connexion ou de liaison.

6. Wagon selon l'une quelconque des revendications précédentes, **caractérisé en ce que** le réglage en hauteur s'effectue par la variation d'épaisseur d'au moins une pièce d'interposition.

7. Wagon selon l'une quelconque des revendications 1 à 5, **caractérisé en ce que** le réglage en hauteur s'effectue par le déplacement longitudinal ou transversal à la structure de liaison (2) d'au moins une pièce d'interposition présentant au moins une face de portée oblique.

8. Wagon selon l'une quelconque des revendications 1 à 5, **caractérisé en ce que** le réglage en hauteur s'effectue par une conformation en rampe oblique (45).

9. Wagon selon l'une quelconque des revendications 1 à 5, **caractérisé en ce que** le réglage en hauteur s'effectue par un écarteur.

10. Wagon selon l'une quelconque des revendications 1 à 5, **caractérisé en ce que** le réglage en hauteur s'effectue par au moins un dispositif à came, au moins un dispositif à levier (39), au moins un dispositif à parallélogramme (47), au moins un dispositif à glissière (46), au moins un dispositif à broches ou à axes, au moins un vérin à vis, ou hydraulique ou pneumatique, au moins un dispositif à soufflet ou au moins un dispositif à crémaillère.

11. Wagon selon l'une quelconque des revendications 1 à 10 **caractérisé en ce que** l'au moins une interface (32) de compensation en hauteur se trouve à chacune des extrémités de la structure ferroviaire porteuse et est placée au-dessus de chaque plateforme (11) et (12) couvrant chaque crapaudine.

12. Wagon selon l'une quelconque des revendications 1 à 10 **caractérisé en ce que** l'au moins une interface (32) de compensation en hauteur se trouve à chacune des extrémités des bras de la structure ferroviaire porteuse entre chaque crochet (28) et (29) d'accrochage et la partie portant le crochet de chaque bras d'extrémité de la structure ferroviaire réceptrice et porteuse (22).

13. Wagon selon l'une quelconque des revendications précédentes, **caractérisé en ce que** les pièces des plateformes d'extrémité (11) et (12) recevant les extrémités en crochet (28) et (29) sont des têtes d'appui (30) et (31).

## Patentansprüche

1. Transportwagen, bestehend aus zwei End-Schienenfahrzeugeinheiten (3) und (4), die jeweils an den Endabschnitten eine Plattform (11, 12), sowie eine zwischen den Endabschnitten befindliche Verbindungsstruktur (2) umfasst, um mindestens eine Ladung allgemeinen Frachtguts oder eine Ladung aus dem Güterkraftverkehr zu tragen, wobei diese Verbindungsstruktur (2) direkt oder indirekt montiert ist oder direkt oder indirekt artikulierbar bzw. dissoziierbar oder nicht an ihre Enden an den beiden End-Schienenfahrzeugeinheiten (3) und (4) aufliegt und **dadurch gekennzeichnet ist, dass**:
• Die Verbindungsstruktur (2), die eine Schienen-Tragstruktur ist, zwei Flankenstücke (23) und (24) umfasst, die einen Boden (25) begrenzen und an jedem Ende der Schienen-Tragstruktur mit zwei Armen (26) und (27) enden, die an ihren Enden durch Haken (28) und (29) verlängert sind;
• Die am Ende befindlichen Haken (28) und (29) von Teilen der Endplattformen (11) und (12) aufgenommen werden, wodurch eine Trennung der Schienen-Tragstruktur (2) von den Endschienenfahrzeugeinheiten (3) und (4) ermöglicht wird;
• Der Wagen mindestens eine Schnittstelle (32) zum Höhenausgleich umfasst, die sein(e) ursprünglichen Einstellmittel auf eine vorbestimmte Höhe vor jedem Transport mindestens einer Ladung und während seiner gesamten Dauer bildet, so dass es möglich ist, die Verbindungsstruktur (2) gemäß den auf den leeren und beladenen Wagen bezogenen Variablen auf diese vorbestimmte Höhe zu bringen, so dass der unterste Teil, der zwischen den Endfahrzeugen (3) und (4) des Wagens vorhanden ist, jedes Mal und überall auf einem Niveau befindet, das nahe an der Untergrenze des Lademaßes für Schienenfahrzeuge liegt, diese aber nicht überschrei tet.

2. Wagen nach Anspruch 1, **dadurch gekennzeichnet, dass** die Verbindungsstruktur (2) vom Typ eines oder mehrerer Lastträger, eines motorisierten oder nicht motorisierten Straßenfahrzeugs, wie beispielsweise eines Anhängers, Aufliegers, Containers, Wechselaufbaus oder eines abnehmbaren Lastplateaus, ist.

3. Wagen nach einem der obigen Ansprüche, **dadurch gekennzeichnet, dass** das niedrige Niveau unter Berücksichtigung von Lademaß und Form des Wagenunterbaus das niedrigste zulässige Niveau ist.

4. Wagen nach einem der obigen Ansprüche, **dadurch gekennzeichnet, dass** er zwei oder vier Höhenausgleichsschnittstellen (32) umfasst, von denen sich mindestens eine an jedem Ende der Verbindungsstruktur (2) befindet.

5. Wagen nach einem der obigen Ansprüche, **dadurch gekennzeichnet, dass** die Schienenfahrzeugenden (3) und (4) die Verbindungsstruktur (2) an ihren Enden mithilfe von Zwischenträger-, Anschluss- oder Verbindungsmittel tragen.

6. Wagen nach einem der obigen Ansprüche, **dadurch gekennzeichnet, dass** die Höhenverstellung durch die Veränderung der Dicke mindestens eines Zwischenstücks durchgeführt wird.

7. Wagen nach einem der Ansprüche 1 bis 5, **dadurch gekennzeichnet, dass** die Höhenverstellung durch die Längs- oder Querverschiebung mindestens eines Zwischenstücks mit mindestens einer schrägen Auflagefläche zur Verbindungsstruktur (2) durchgeführt wird.

8. Wagen nach einem der Ansprüche 1 bis 5, **dadurch gekennzeichnet, dass** die Höhenverstellung durch eine schräge Rampenkonstruktion (45) durchgeführt wird.

9. Wagen nach einem der Ansprüche 1 bis 5, **dadurch gekennzeichnet, dass** die Höhenverstellung durch einen Abstandshalter erfolgt.

10. Wagen nach einem der Ansprüche 1 bis 5, **dadurch gekennzeichnet, dass** die Höhenverstellung durch mindestens eine Nockenvorrichtung, mindestens eine Hebelvorrichtung (39), mindestens eine Parallelogramm-Vorrichtung (47), mindestens eine Gleitvorrichtung (46), mindestens eine Stift- oder Achsvorrichtung, mindestens eine Gewindespindel oder einen Hydraulik- oder Pneumatikzylinder, mindestens eine Balgvorrichtung oder mindestens eine Zahnstangenvorrichtung durchgeführt wird.

11. Wagen nach einem der Ansprüche 1 bis 10, **dadurch gekennzeichnet, dass** die mindestens eine Höhenausgleichsschnittstelle (32) an jedem Ende der Schienen-Tragstruktur angeordnet ist und über jeder Plattform (11) und (12) angeordnet ist, die jede Lagerpfanne abdeckt.

12. Wagen nach einem der Ansprüche 1 bis 10, **dadurch gekennzeichnet, dass** die mindestens eine Höhenausgleichsschnittstelle (32) an jedem Ende der Arme der Schienen-Tragstruktur zwischen jedem Haken (28) und (29) und dem hakengelagerten Teil jedes Endarms der aufnehmenden und tragenden Schienen-Tragstruktur (22) angeordnet ist.

13. Wagen nach einem der obigen Ansprüche, **dadurch gekennzeichnet, dass** die Teile der Endplattformen (11) und (12), die die Hakenenden (28) und (29) aufnehmen, Trägerköpfe (30) und (31) sind.

## Claims

1. Transportation wagon consisting of two end railway rolling assemblies (3) and (4) each incorporating one end platform (11, 12) and a connecting structure (2) between these end assemblies to carry at least a load of freight either of a general nature or intended for road transportation, with this connecting structure (2) being mounted directly or indirectly, or resting directly or indirectly in an articulated or separable or inseparable manner via its ends, on the two end railway rolling assemblies (3) and (4), **characterized in that**:
• the connecting structure (2), which is a load-bearing railway structure, incorporates two side parts (23) and (24) edging a bottom (25), and terminating, at each of the ends of the load-bearing railway structure, with two arms (26) and (27) extended by hooked extremities (28) and (29);
• the hooked extremities (28) and (29) are accommodated by parts of the end platforms (11) and (12), allowing a disassociation of the load-bearing railway structure (2) with respect to the end railway rolling assemblies (3) and (4);
• the wagon incorporates at least one height compensation interface (32) that constitutes its means of initial adjustment to a previously determined height before each transportation of at least one load, and throughout the whole duration of the transportation, allowing the connecting structure (2) to be positioned at this height being previously determined in accordance with variables depending on the wagon when empty and when loaded, so that, each time, the lowest part existing between the end railway rolling assemblies (3) and (4) of the wagon is at all points at a low level, close to but not exceeding the lower limit of the railway gauge.

2. Wagon according to claim 1, **characterized in that** the connecting structure (2) is of load-bearing type, for a road vehicle motor-driven or otherwise such as a trailer, a semi-trailer, a container, a mobile crate, or a detachable load-bearing platform.

3. Wagon according to any one of the preceding claims, **characterized in that** the low level is the lowest level permissible taking account of the railway gauge and the bottom shape of the wagon.

4. Wagon according to any one of the preceding claims, **characterized in that** it incorporates two or four height compensation interfaces (32), with at least one at each end of the connecting structure (2).

5. Wagon according to any one of the preceding claims, **characterized in that** the end railway rolling assemblies (3) and (4) bear the connecting structure (2) by its extremities, via an intermediate supporting, connecting or linking means.

6. Wagon according to any one of the preceding claims, **characterized in that** the height adjustment is accomplished through the variation in thickness of at least one interposed part.

7. Wagon according to any one of claims 1 to 5, **characterized in that** the height adjustment is accomplished via the longitudinal or transversal displacement, with respect to the connecting structure (2), of at least one interposed part having at least one face with an oblique span.

8. Wagon according to any one of claims 1 to 5, **characterized in that** the height adjustment is accomplished via a configuration into an oblique ramp (45).

9. Wagon according to any one of claims 1 to 5, **characterized in that** the height adjustment is performed by a separator.

10. Wagon according to any one of claims 1 to 5, **characterized in that** the height adjustment is performed by at least one cam-based device, at least one lever-based device (39), at least one device with parallelogram (47), at least one slide-based device (46), at least one device with pins or shafts, at least one screw or hydraulic or pneumatic jack, at least one bellows-based device, or at least one rack-based device.

11. Wagon according to any one of claims 1 to 10, **characterized in that** the at least one height compensation interface (32) is located at each end of the load-bearing railway structure, and is positioned above each platform (11) and (12) covering each centre plate.

12. Wagon according to any one of claims 1 to 10, **characterized in that** the at least one height compensation interface (32) is located at each end of the arms of the load-bearing railway structure, between each connection hook (28) and (29) and the part carrying the hook of each end arm of the accommodating and load-bearing railway structure (22).

13. Wagon according to any one of the preceding claims, **characterized in that** the parts of the end platforms (11) and (12) accommodating the hooked extremities (28) and (29) are bearing heads (30) and (31).
